# FASCICULE DE BREVET EUROPEEN

(11) **EP 2 390 186 B1**
(45) Date de publication et mention de la délivrance du brevet: **28.09.2016**
(21) Numéro de dépôt: 11167665.6
(22) Date de dépôt: 26.05.2011
(51) Int. Cl.: B64F 5/00, B64D 29/06, B64D 33/04

(54) **Procédé de fabrication par formage superplastique et par éclissage d'une nervure pour carénage aérodynamique de mat d'accrochage de moteur d'aéronef**
Herstellungsverfahren für eine Rippe zur aerodynamischen Verkleidung eines Triebwerkspylons mittels superplastischer Formung und Verlaschung
Manufacturing method for a rib of an aerodynamic engine strut fairing involving superplastic forming and splicing

(30) Priorité: 27.05.2010 FR 1054065
(43) Date de publication de la demande: 30.11.2011
(73) Titulaire: Airbus Operations, 31060 Toulouse (FR)
(72) Inventeur: Machado, Stéphane, 82600 Verdun sur Garonne (FR); Raison, Fabien, 31830 Plaisance du Touch (FR); Romani, Stéphane, 31400 Toulouse (FR)
(74) Mandataire: Ilgart, Jean-Christophe

(56) Documents cités:
- WO-A1-2007/058906
- WO-A1-2008/113737
- DE-A1-102008 014 103

## Description

### DOMAINE TECHNIQUE

La présente invention se rapporte à un carénage aérodynamique arrière inférieur pour dispositif d'accrochage d'un moteur destiné à être interposé entre une voilure d'aéronef et le moteur concerné, ce carénage étant également appelé « bouclier » ou « APF » (de l'anglais « Aft Pylon Fairing »).

Un tel dispositif d'accrochage, également appelé mât d'accrochage ou « EMS » (de l'anglais « Engine Mounting Structure »), permet de suspendre un turbomoteur au-dessous de la voilure de l'aéronef, de monter ce turbomoteur au-dessus de cette même voilure, ou encore de le monter latéralement en partie arrière du fuselage. Un exemple de dispositif d'accrochage est connu à partir du document WO 2009/037267 ou encore du document WO 2007/058906. du fuselage. Un exemple de dispositif d'accrochage est connu du document WO 2007/037267 ou encore du document WO 2007/058906.

Plus précisément, l'invention porte sur les nervures intérieures transversales de rigidification qui équipent le carénage aérodynamique arrière inférieur, et plus particulièrement à leur procédé de fabrication.

L'invention peut être utilisée sur tout type d'aéronef équipé de turboréacteurs ou de turbopropulseurs.

### ETAT DE LA TECHNIQUE ANTERIEURE

Un dispositif d'accrochage est en effet prévu pour constituer l'interface de liaison entre un turbomoteur et une voilure de l'aéronef. Il permet de transmettre à la structure de cet aéronef les efforts générés par son turbomoteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide également dénommée structure primaire, souvent du type « caisson », c'est-à-dire formée par l'assemblage de longerons supérieurs et inférieurs et de panneaux latéraux raccordés entre eux par l'intermédiaire de nervures transversales de rigidification.

D'autre part, le dispositif est muni de moyens d'accrochage interposés entre le turbomoteur et la structure rigide, ces moyens comportant globalement deux attaches moteur, ainsi qu'un dispositif de reprise des efforts de poussée générés par le turbomoteur. Dans l'art antérieur, ce dispositif de reprise comprend habituellement deux bielles latérales raccordées d'une part à une partie arrière du carter de soufflante du turbomoteur, et d'autre part à une attache arrière fixée sur le carter central de ce dernier.

De la même façon, le dispositif d'accrochage comporte également une autre série d'attaches constituant un système de montage interposé entre la structure rigide et la voilure de l'aéronef, ce système étant habituellement composé de deux ou trois attaches.

Par ailleurs, le mât est pourvu d'une pluralité de structures secondaires assurant la ségrégation et le maintien des systèmes tout en supportant des éléments de carénage aérodynamique, ces derniers prenant généralement la forme d'assemblages de panneaux rapportés sur les structures. De façon connue de l'homme du métier, les structures secondaires se différencient de la structure rigide par le fait qu'elles ne sont pas destinées à assurer le transfert des efforts provenant du moteur et devant être transmis vers la voilure de l'aéronef.

Parmi les structures secondaires, on compte le carénage aérodynamique arrière inférieur, également dénommé APF, qui dispose d'une pluralité de fonctions parmi lesquelles on note la formation d'une barrière thermique ou anti-feu, et la formation d'une continuité aérodynamique entre la sortie du moteur et le mât d'accrochage.

Le carénage aérodynamique arrière inférieur prend généralement la forme d'un caisson comprenant deux panneaux latéraux assemblés entre eux par des nervures intérieures transversales de rigidification espacées les unes des autres selon une direction longitudinale du carénage, ainsi qu'un plancher de protection thermique. Il est précisé que ce caisson peut ne pas être entièrement fermé à l'opposé du plancher de protection thermique, à savoir en partie supérieure lorsque le moteur est destiné à être suspendu sous la voilure de l'aéronef, étant donné que c'est à cet endroit qu'il vient se raccorder sur les autres structures du mât.

Le plancher de protection thermique est pourvu d'une surface extérieure destinée à être épousée par un flux primaire du moteur qu'il délimite, alors que les panneaux latéraux sont quant à eux prévus pour être épousés extérieurement par un flux secondaire du moteur, en raison de leur implantation dans le canal annulaire de flux secondaire du moteur, et/ou en sortie de celui-ci.

Les nervures intérieures sont habituellement réalisées dans un alliage de titane TA6V, en raison des excellentes caractéristiques mécaniques qu'il confère, et de sa masse relativement faible, notamment en comparaison de la masse de l'acier.

L'usinage constitue une première technique de fabrication pour la nervure. Elle a l'avantage d'offrir des tolérances précises, mais ne permet pas d'obtenir des nervures de faible épaisseur. En effet, en dessous d'une certaine épaisseur de nervure, par exemple de l'ordre de 2 mm, celle-ci n'est plus capable de supporter la contrainte d'usinage.

La formation d'une telle nervure intérieure par formage superplastique est également connue. Elle présente l'avantage de n'être limitée par aucune contrainte d'usinage, de sorte qu'elle convient parfaitement pour l'obtention de nervures de faible épaisseur. En revanche, les nervures ainsi formées disposent de tolérances peu précises.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un procédé de fabrication d'une nervure intérieure transversale de rigidification pour carénage aérodynamique arrière inférieur de dispositif d'accrochage d'un moteur destiné à être interposé entre une voilure d'aéronef et ledit moteur, ledit procédé comprenant les étapes mentionnées dans la revendication 1. une voilure d'aéronef et ledit moteur, ledit procédé mentionnées dans la revedication 1.

L'invention est essentiellement remarquable en ce qu'elle permet d'obtenir une nervure de faible épaisseur grâce à la réalisation de la préforme de nervure par formage superplastique, et de lui conférer des tolérances précises grâce à l'assemblage des deux demi-parties de préforme de nervure par éclissage.

De préférence, l'étape de découpage est réalisée de manière à ce que les deux segments de droite soient supportés par une même diagonale du quadrilatère. Une alternative de réalisation consiste bien évidemment à les prévoir parallèles, mais décalés l'un de l'autre, à savoir respectivement supportés par deux droites parallèles non confondues. Dans les deux cas, l'ajustement de la position relative des deux demi-parties de préforme de nervure, avant leur éclissage, permet d'obtenir des cotes précises dans les deux directions du plan de nervure, à savoir la hauteur et la largeur. Pour leur ajustement, ces demi-parties sont par exemple agencées sur un outillage de positionnement simple et peu coûteux, très répandu dans l'industrie.

De préférence, la préforme de nervure est réalisée de manière à ce qu'elle présente, en vue de face, un contour en forme globale de trapèze. Néanmoins, d'autres formes de quadrilatère pourraient être envisagées, comme par exemple un carré ou un rectangle.

De préférence, la préforme de nervure est réalisée dans un alliage de titane TAV6.

L'invention a également pour objet un carénage aérodynamique arrière inférieur pour dispositif d'accrochage d'un moteur destiné à être interposé entre une voilure d'aéronef et le moteur, le carénage formant caisson comprenant deux panneaux latéraux assemblés entre eux par des nervures intérieures transversales de rigidification espacées les unes des autres selon une direction longitudinale du carénage, et comportant en outre un plancher de protection thermique pourvu d'une surface extérieure destinée à être épousée par un flux primaire du moteur.

Selon l'invention, au moins l'une desdites nervures intérieures transversales de rigidification est fabriquée par la mise en oeuvre du procédé décrit ci-dessus.

L'invention a aussi pour objet un dispositif d'accrochage d'un moteur destiné à être interposé entre une voilure d'aéronef et le moteur, ce dispositif comprenant un carénage aérodynamique arrière inférieur tel que décrit ci-dessus.

En outre, l'invention a également pour objet un ensemble moteur comprenant un moteur tel qu'un turboréacteur et un dispositif d'accrochage de ce moteur, ce dispositif étant conforme à celui qui vient d'être évoqué.

Enfin, un autre objet de la présente invention est un aéronef comprenant au moins un tel ensemble moteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un ensemble moteur pour aéronef, comprenant un dispositif d'accrochage selon un mode de réalisation préféré de la présente invention ;
- la figure 2 représente une vue schématique de côté plus détaillée du carénage aérodynamique arrière inférieur équipant le dispositif d'accrochage montré sur la figure 1, ce carénage étant également objet de la présente invention ;
- la figure 3 représente une vue en perspective d'une partie du carénage aérodynamique arrière inférieur montré sur la figure 2 ; et
- les figures 4a à 4d' représentent diverses étapes d'un procédé fabrication d'une nervure intérieure équipant le carénage montré sur les figures 2 et 3, ce procédé se présentant sous la forme d'un mode de réalisation préféré de la présente invention.

### EXPOSÉ DÉTAILLÉ DE MODES DE RÉALISATION PRÉFÉRÉS

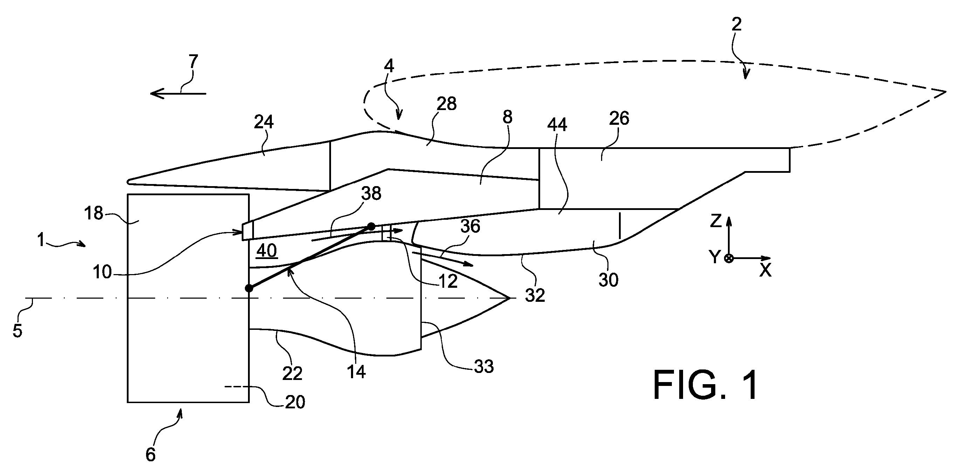

En référence à la figure 1, on voit un ensemble moteur 1 pour aéronef destiné à être fixé sous une aile 2 de cet aéronef, cet ensemble 1 comportant un dispositif d'accrochage 4 selon un mode de réalisation préféré de la présente invention, ainsi qu'un moteur 6 tel qu'un turboréacteur accroché sous ce dispositif 4.

Globalement, le dispositif d'accrochage 4 comporte une structure rigide 8, également appelée structure primaire, portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est noté que l'ensemble 1 est destiné à être entouré d'une nacelle (non représentée), et que le dispositif d'accrochage 4 comporte une autre série d'attaches (non représentées) rapportées sur la structure rigide 8 et permettant d'assurer la suspension de cet ensemble 1 sous la voilure 2 de l'aéronef.

Dans toute la description qui va suivre, par convention, on appelle X la direction longitudinale du dispositif 4 qui est également assimilable à la direction longitudinale du turboréacteur 6 et à celle du carénage aérodynamique arrière inférieur qui sera présenté ci-après, cette direction X étant parallèle à un axe longitudinal 5 de ce turboréacteur 6. D'autre part, on appelle Y la direction orientée transversalement par rapport au dispositif 4 et également assimilable à la direction transversale du turboréacteur 6 et à celle du carénage aérodynamique arrière inférieur, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Sur la figure 1, on peut donc voir les deux attaches moteur 10, 12, le dispositif de reprise des efforts de poussée 14, la structure rigide 8 du dispositif d'accrochage 4, ainsi qu'une pluralité de structures secondaires rapportées sur la structure rigide 8. Ces structures secondaires assurant la ségrégation et le maintien des systèmes tout en supportant des éléments de carénage aérodynamique seront décrites ci-après.

Il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 22 sont bien entendu solidaires l'un de l'autre.

Comme on peut l'apercevoir sur la figure 1, les attaches moteur 10, 12 du dispositif 4 sont prévues au nombre de deux, et respectivement dénommées attache moteur avant et attache moteur arrière.

Dans ce mode de réalisation préféré de la présente invention, la structure rigide 8 prend la forme d'un caisson s'étendant de l'arrière vers l'avant, sensiblement selon la direction X.

Le caisson 8 prend alors la forme d'un mât de conception similaire à celle habituellement observée pour les mâts d'accrochage de turboréacteurs, notamment en ce sens qu'il est pourvu de nervures transversales (non représentées) prenant chacune la forme d'un rectangle orienté dans un plan YZ.

Les moyens d'accrochage de ce mode de réalisation préféré comportent tout d'abord l'attache moteur avant 10 interposée entre une extrémité avant de la structure rigide 8 également appelée pyramide, et une partie supérieure du carter de soufflante 18. L'attache moteur avant 10 est conçue de manière classique et connue de l'homme du métier.

D'autre part, l'attache moteur arrière 12, également réalisée de façon classique et connue de l'homme du métier, est quant à elle interposée entre la structure rigide 8 et le carter central 22.

Toujours en référence à la figure 1, on compte parmi les structures secondaires du mât 4 une structure aérodynamique avant 24, une structure aérodynamique arrière 26, un carénage de raccordement 28 des structures aérodynamiques avant et arrière, et un carénage aérodynamique arrière inférieur 30.

Globalement, ces structures secondaires sont des éléments classiques identiques ou similaires à ceux rencontrés dans l'art antérieur, et connus de l'homme du métier, à l'exception du carénage aérodynamique arrière inférieur 30 qui sera détaillé ci-dessous.

Plus précisément, la structure aérodynamique avant 24 est placée dans le prolongement avant inférieur de la voilure 2 et au-dessus de la structure primaire 8. Elle est montée fixement sur la structure rigide 8, et présente une fonction de profil aérodynamique entre une partie supérieure des capots de soufflante articulés sur celle-ci, et le bord d'attaque de la voilure. Cette structure aérodynamique avant 24 dispose alors non seulement d'une fonction de carénage aérodynamique, mais permet également la mise en place, la ségrégation et le cheminement de différents systèmes (air, électrique, hydraulique, carburant). De plus, la partie avant de cette structure 24 n'étant pas au contact de la structure rigide 8, il est habituellement interposé un échangeur thermique dans l'espace défini entre ces deux éléments.

Directement dans le prolongement arrière de cette structure 24, toujours sous la voilure et monté au-dessus de la structure rigide 8, se trouve le carénage de raccordement 28, également appelé « karman ». Ensuite, toujours vers l'arrière, le carénage de raccordement 28 est prolongé par la structure aérodynamique arrière 26, qui contient la majeure partie des équipements hydrauliques. Cette structure 26 est de préférence située entièrement en arrière par rapport à la structure rigide 8, et est donc attachée sous la voilure de l'aéronef.

Enfin, sous la structure rigide 8 et la structure aérodynamique arrière 26, se trouve le carénage aérodynamique arrière inférieur 30, également appelé « bouclier » ou « Aft Pylon Fairing ». Ses fonctions essentielles sont la formation d'une barrière thermique également dite anti-feu servant à protéger le mât et la voilure de la chaleur dégagée par le flux primaire, et la formation d'une continuité aérodynamique entre la sortie du moteur et le mât d'accrochage.

Le carénage 30 précité comporte un plancher de protection thermique 32, ou longeron inférieur, pourvu d'une surface extérieure destinée à être épousée par un flux primaire du moteur qu'il délimite partiellement radialement vers l'extérieur, ce flux primaire s'échappant de la tuyère 33 du moteur étant représenté schématiquement par la flèche 36. Par ailleurs, le carénage 30 comporte aussi deux panneaux latéraux 44 qui sont quant à eux prévus pour être épousés extérieurement par un flux secondaire du moteur représenté schématiquement par la flèche 38, en raison de leur implantation dans le canal annulaire 40 de flux secondaire du moteur, et/ou en sortie de celui-ci.

Il est noté que dans le mode de réalisation préféré décrit où le moteur 6 est destiné à être suspendu sous la voilure de l'aéronef, le plancher 32 de protection thermique du mât et de la voilure vis-à-vis du flux primaire 36, constitue une portion inférieure du carénage 30. Naturellement, ce plancher constituerait une portion supérieure du carénage dans le cas alternatif où le moteur serait destiné à être implanté au-dessus de la voilure.

Enfin, comme cela est visible sur la figure 1, il est prévu que l'extrémité avant du plancher 32 vienne épouser l'extrémité arrière supérieure de la tuyère 33, ou bien qu'elle soit fortement rapprochée de cette même extrémité arrière de tuyère 33.

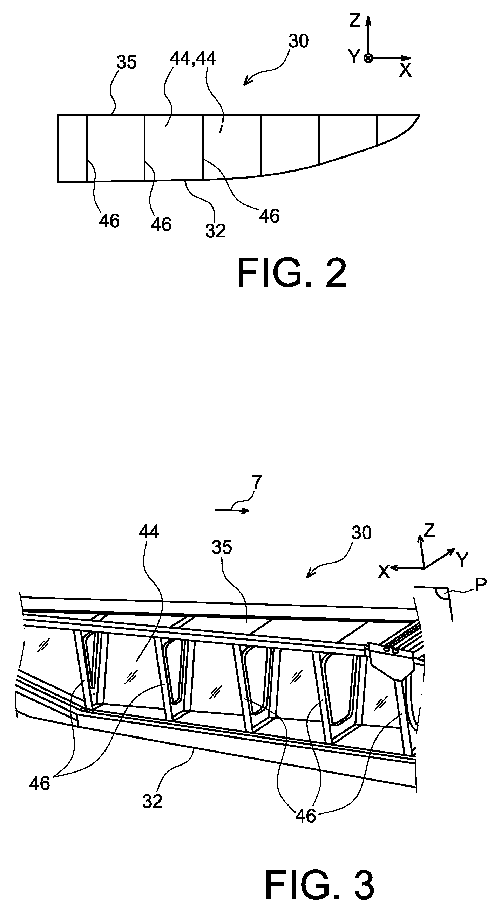

En référence à présent aux figures 2 et 3, on peut apercevoir de façon plus détaillée le carénage aérodynamique arrière inférieur 30, qui prend la forme générale d'un caisson fermé vers le haut par un longeron supérieur 35, c'est-à-dire en direction des autres structures du mât 4 sur lesquelles il est destiné à être monté, à savoir la structure aérodynamique arrière 26 et la structure rigide 8. Le carénage 30 présente de préférence un plan de symétrie P correspondant à un plan XZ, ce plan P constituant également un plan vertical de symétrie pour l'ensemble du dispositif d'accrochage 4, et pour le moteur 6.

Le carénage aérodynamique arrière inférieur 30 en forme de caisson comprend en outre les deux panneaux latéraux 44 (un seul visible sur chacune des figures 2 et 3 pour des raisons de clarté), chacun des panneaux 44 étant grossièrement orienté dans un plan XZ, de part et d'autre du plan P. Ils sont assemblés entre eux par des nervures intérieures transversales de rigidification 46 espacées les unes des autres selon la direction X, chacune de ces nervures 46 étant orientée selon un plan YZ. Ces nervures 46 orientées transversalement sont également assemblées sur les longerons supérieur 35 et inférieur 32, permettant ainsi de maintenir ensemble la totalité des éléments extérieurs 32, 35, 44 formant le caisson.

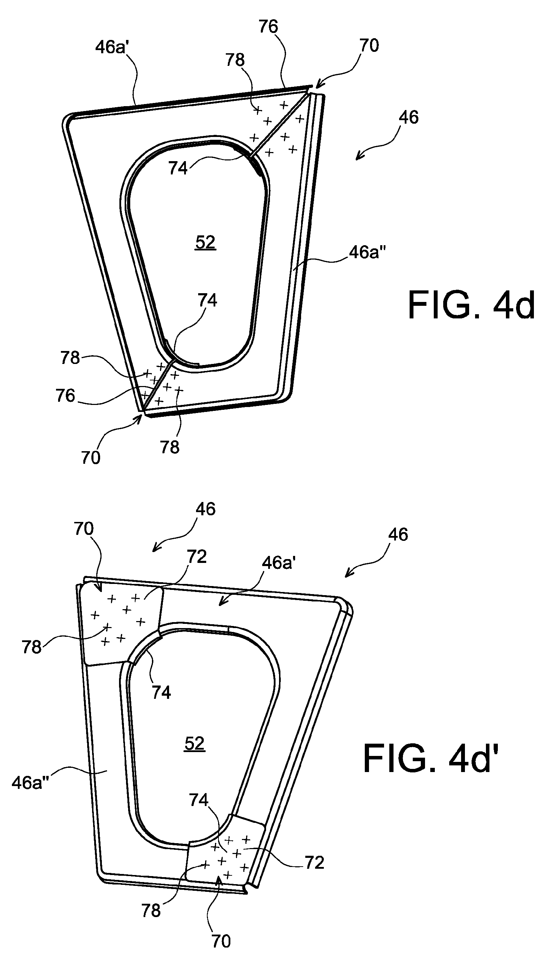

Les figures 4d et 4d' représentent l'une de ces nervures 46, dont le procédé de fabrication va à présent être décrit. Il est entendu que les autres nervures intérieures de rigidification peuvent être réalisées selon un procédé identique ou similaire. Sur ces deux figures, qui représentent la même nervure 46 vue depuis deux faces opposées, on peut s'apercevoir qu'elle adopte une forme sensiblement plane, par exemple d'une épaisseur de quelques millimètres d'épaisseur, de préférence inférieure ou égale à 2 mm. Elle présente globalement la forme d'un trapèze perforé en son centre par une ouverture, avec la grande base se situant vers le haut et la petite base vers le bas. Ainsi, la grande base est destinée à être raccordée au longeron supérieur du carénage, la petite base destinée à être raccordée au longeron inférieur du carénage, et les deux côtés respectivement destinés à être raccordés aux deux panneaux latéraux de ce même carénage.

A titre indicatif, la surface de l'ouverture occupe de 40 à 60% de la surface totale de la nervure traversée par cette ouverture.

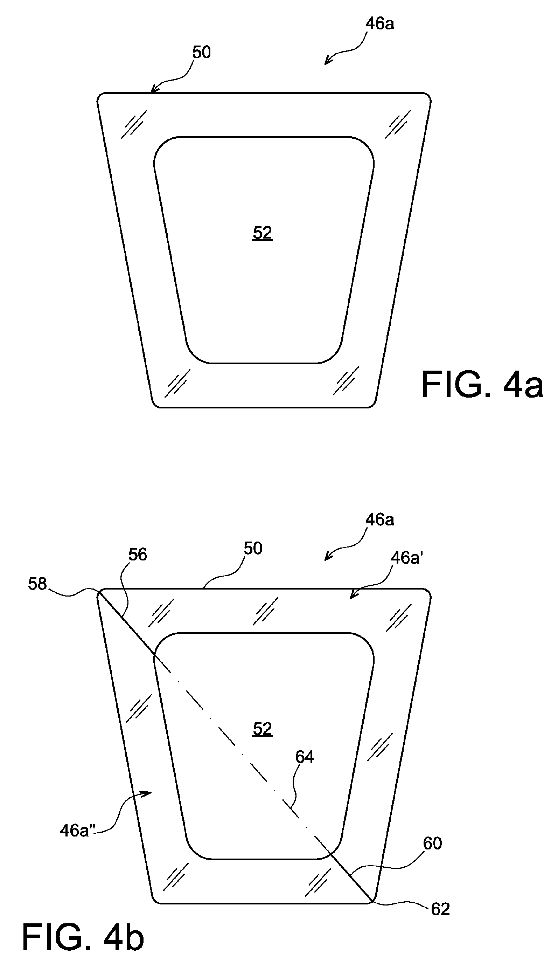

En référence tout d'abord à la figure 4a, le procédé de fabrication de la nervure est débuté par la réalisation d'une préforme de nervure 46a, par formage superplastique, également dénommé SPF (de l'anglais « Superplastic Forming »). Cette préforme 46a présente une géométrie similaire à celle de la nervure finale représentée sur les figures 4d et 4d'. En particulier, en vue de face telle que représentée sur la figure 4a, la préforme 46a présente un contour 50 en forme globale de quadrilatère, et plus précisément en forme de trapèze. De plus, elle dispose d'une ouverture centrale 52 traversant entièrement la préforme 46a, également de forme globale trapézoïdale, de sorte que la préforme 46a adopte une forme générale de cadre suivant le contour d'un trapèze.

La préforme de nervure 46a est réalisée d'une seule pièce dans un alliage de titane TAV6, qui présente des caractéristiques appropriées pour la mise en oeuvre de l'étape de formage superplastique permettant son obtention, d'une manière connue de l'homme du métier.

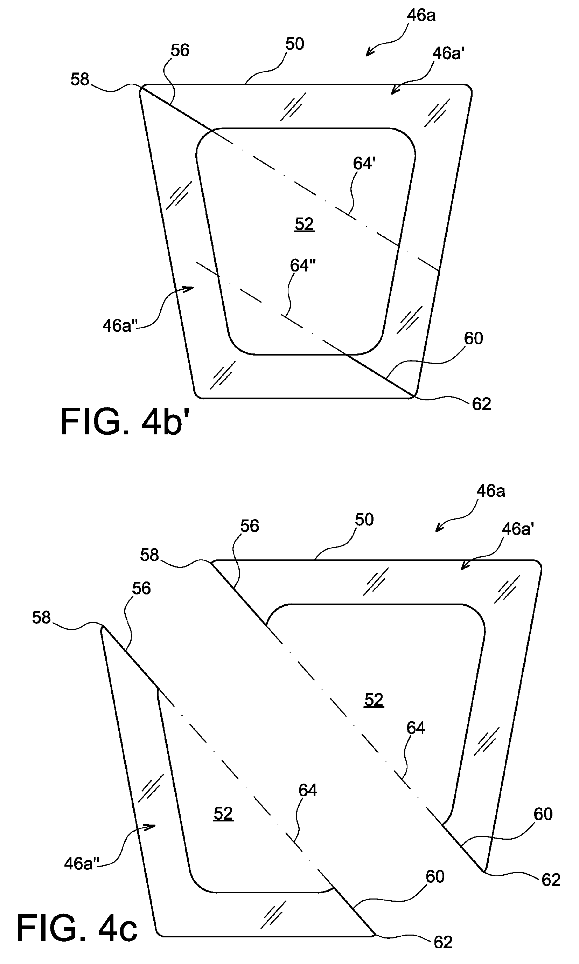

Ensuite, il est procédé au découpage de ladite préforme de nervure 46a, de manière à la scinder en deux demi-parties de nervures 46a' et 46a". Sur la figure 4b, on peut apercevoir que ce découpage s'effectue dans deux zones diagonalement opposées de la préforme, puisqu'une première découpe s'effectue selon un premier segment de droite 56 reliant un premier angle 58 du trapèze 50 à l'ouverture 52, et qu'une seconde découpe s'effectue selon un second segment de droite 60 reliant un second angle 62 du trapèze à l'ouverture, le second angle 62 étant diagonalement opposé au premier angle 58 précité.

Sur la figure 4b, les deux segments de droite 56, 60 sont supportés par une même diagonale 64 du trapèze. Une autre possibilité réside dans la possibilité, montrée sur la figure 4b', de prévoir les deux segments 56, 60 parallèles, mais décalés l'un de l'autre, à savoir respectivement supportés par deux droites parallèles non confondues référencées 64' et 64". Dans les deux cas, l'ajustement de la position relative des deux demi-parties de préforme 46a' et 46a", montrées sur la figure 4c, permet d'obtenir des cotes précises dans les deux directions du plan de nervure, à savoir selon la direction de la hauteur selon laquelle sont écartées les deux bases du trapèze, et selon la direction de la largeur selon laquelle sont écartés les deux côtés de ce même trapèze. Quoi qu'il en soit, ce repositionnement des deux demi-parties de préforme 46a' et 46a'' permet d'obtenir des tolérances plus précises que celles présentées initialement par la préforme de nervure 46a.

Ensuite, une fois que les deux demi-parties de préforme 46a' et 46a" ont été repositionnées l'une par rapport à l'autre, il est procédé à leur éclissage par boulonnage, de manière à obtenir la nervure intérieure transversale de rigidification représentée sur les figures 4d et 4d'.

Pour ce faire, il est prévu une éclisse 70 à chacune des deux jonctions entre les deux demi-parties de préforme 46a' et 46a".

Chaque éclisse comprend un flan 72 en appui contre l'une des faces des demi-parties 46a', 46a", ce flan définissant un coin se superposant à l'angle de trapèze recomposé par l'assemblage des demi-parties 46a', 46a". De plus, le flan 72 s'étend jusqu'à l'ouverture 52, en présentant un rebord 74 épousant l'intérieur de celle-ci. En outre, une âme 76 fait saillie du flan 72, en direction de la face opposée des demi-parties 46a', 46a", sans s'étendre au-delà de celle-ci. Cette âme 76, également issue du rebord 74, présente deux surfaces opposées, chacune en regard et éventuellement au contact de l'un des chants découpés des demi-parties 46a', 46a".

De préférence, chaque éclisse 70 est réalisée d'une seule pièce, par exemple en alliage de titane.

Enfin, des boulons 78 permettent de solidariser le flan 72 des éclisses 70 sur les extrémités des demi-parties 46a', 46a" qu'elles raccordent.

Bien entendu, diverses modifications peuvent être apportées par l'homme du métier à l'invention qui vient d'être décrite, uniquement à titre d'exemples non limitatifs. A cet égard, on peut notamment indiquer qui si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure, voire en partie arrière du fuselage.

## Revendications

1. Procédé de fabrication d'une nervure intérieure transversale de rigidification (46) pour carénage aérodynamique arrière inférieur (30) de dispositif d'accrochage (4) d'un moteur (6) destiné à être interposé entre une voilure (2) d'aéronef et ledit moteur (6), ledit procédé comprenant les étapes successives suivantes :
- réalisation d'une préforme de nervure (46a) par formage superplastique, ladite préforme présentant, en vue de face, un contour (50) en forme globale de quadrilatère, ainsi qu'une ouverture centrale (52) traversant cette préforme de nervure ;
- découpage de ladite préforme de nervure (46a) selon deux segments de droite parallèles (56, 60), un premier segment de droite (56) reliant un premier angle (58) du quadrilatère à ladite ouverture, et un second segment de droite (60) reliant un second angle (62) du quadrilatère, diagonalement opposé au premier, à ladite ouverture, ledit découpage engendrant la séparation en deux demi-parties (46a', 46a") de ladite préforme de nervure ;
- ajustement de la position relative des deux demi-parties de préforme; et
- éclissage des deux demi-parties de ladite préforme de nervure ;
- ajustement de la position relative des deux demi-parties préforme de nervure (46a', 46a") par boulonnage, de manière à obtenir ladite nervure intérieure transversale de rigidification (46).

2. Procédé de fabrication selon la revendication 1, dans lequel l'étape de découpage est réalisée de manière à ce que les deux segments de réalisée de manière à ce que les deux segments de droite (56, 60) soient supportés par une même diagonale (64) du quadrilatère.

3. Procédé de fabrication selon la revendication 1 ou la revendication 2, dans lequel la préforme de nervure (46a) est réalisée de manière à ce qu'elle présente, en vue de face, un contour en forme globale de trapèze (50).

4. Procédé de fabrication selon l'une quelconque des revendications précédentes, dans lequel la préforme de nervure (46a) est réalisée dans un alliage de titane TAV6.

5. Carénage aérodynamique arrière inférieur (30) pour dispositif d'accrochage (4) d'un moteur (6) destiné à être interposé entre une voilure (2) d'aéronef et ledit moteur (6), ledit carénage formant caisson comprenant deux panneaux latéraux (44) assemblés entre eux par des nervures intérieures transversales de rigidification (46) espacées les unes des autres selon une direction longitudinale (X) dudit carénage, et comportant en outre un plancher de protection thermique (32) pourvu d'une surface extérieure (72) destinée à être épousée par un flux primaire (36) dudit moteur,
**caractérisé en ce qu'**au moins l'une desdites nervures intérieures transversales de rigidification (46) est fabriquée par la mise en oeuvre du procédé selon l'une quelconque des revendications précédentes.

6. Dispositif d'accrochage (4) d'un moteur (6) destiné à être interposé entre une voilure (2) d'aéronef et ledit moteur (6), **caractérisé en ce qu'**il comprend un carénage aérodynamique arrière inférieur (30) selon la revendication 5.

7. Ensemble moteur (1) comprenant un moteur (6) et un dispositif d'accrochage (4) du moteur (6) selon la revendication 6.

8. Aéronef comprenant au moins un ensemble moteur (1) selon la revendication 7.

## Patentansprüche

1. Verfahren zur Herstellung einer querverlaufenden inneren Versteifungsrippe (46) zur unteren hinteren aerodynamischen Verkleidung (30) einer Pylonvorrichtung (4) eines Triebwerks (6), die dazu bestimmt ist, zwischen einer Tragfläche (2) eines Luftfahrzeugs und dem Triebwerk (6) angeordnet zu werden, wobei das Verfahren die folgenden aufeinanderfolgenden Schritte umfasst:
- Herstellen eines Vorformlings (46a) der Rippe durch superplastische Formung, wobei der Vorformling, von vorne gesehen, eine Kontur (50) in der allgemeinen Form eines Vierecks sowie eine zentrale Öffnung (52), die diesen Vorformling der Rippe durchquert, aufweist;
- Schneiden des Vorformlings (46a) der Rippe in zwei gerade parallele Segmente (56, 60), wobei ein erstes gerades Segment (56) einen ersten Winkel (58) des Vierecks mit der Öffnung verbindet, und ein zweites gerades Segment (60) einen zweiten Winkel (62) des Vierecks, diagonal gegenüber dem ersten, mit der Öffnung verbindet, wobei das Schneiden die Trennung des Vorformlings der Rippe in zwei halbe Teile (46a', 46a") bewirkt;
- Einstellen der relativen Position der beiden halben Teile des Vorformlings; und
- Verlaschen der beiden halben Teile des Vorformlings der Rippe;
- Einstellen der relativen Position der beiden halben Teile (46a', 46a") des Vorformlings der Rippe durch Verschrauben, um die querverlaufende innere Versteifungsrippe (46) zu erhalten.

2. Herstellungsverfahren nach Anspruch 1, wobei der Schritt des Schneidens derart durchgeführt wird, dass die beiden geraden Segmente (56, 60) von derselben Diagonale (64) des Vierecks getragen werden.

3. Herstellungsverfahren nach Anspruch 1 oder Anspruch 2, wobei der Vorformling (46a) der Rippe derart hergestellt wird, dass dieser, von vorne gesehen, eine Kontur in der allgemeinen Form eines Trapezes (50) aufweist.

4. Herstellungsverfahren nach einem der vorhergehenden Ansprüche, wobei der Vorformling (46a) der Rippe aus einer Titan TAV6-Legierung hergestellt wird.

5. Untere hintere aerodynamische Verkleidung (30) für eine Pylonvorrichtung (4) eines Triebwerks (6), welche dazu bestimmt ist, zwischen einer Tragfläche (2) eines Luftfahrzeugs und dem Triebwerk (6) angeordnet zu werden, wobei die Verkleidung einen Kasten bildet, der zwei seitliche Paneele (44) aufweist, welche durch querverlaufende innere Versteifungsrippen (46) aneinander befestigt werden, die voneinander in einer Längsrichtung (X) der Verkleidung beabstandet sind, und ferner umfassend eine Wärmeschutzplatte (32), welche mit einer Außenfläche (72) versehen ist, die dazu bestimmt ist, von einem primären Strom (36) des Triebwerks überströmt zu werden,
**dadurch gekennzeichnet, dass** mindestens eine der querverlaufenden inneren Versteifungsrippen (46) unter Anwendung des Verfahrens nach einem der vorhergehenden Ansprüche hergestellt wird.

6. Pylonvorrichtung (4) eines Triebwerks (6), welche dazu bestimmt ist, zwischen einer Tragfläche (2) eines Luftfahrzeugs und dem Triebwerk (6) angeordnet zu sein, **dadurch gekennzeichnet, dass** diese eine untere hintere aerodynamische Verkleidung (30) nach Anspruch 5 umfasst.

7. Triebwerkseinheit (1), umfassend ein Triebwerk (6) und eine Pylonvorrichtung (4) des Triebwerks (6) nach Anspruch 6.

8. Luftfahrzeug, umfassend mindestens eine Triebwerkseinheit (1) nach Anspruch 7.

## Claims

1. A method of manufacture of a stiffening transverse internal rib (46) for a lower aft aerodynamic fairing (30) of a mounting device (4) of an engine (6) intended to be interposed between a wing surface (2) of an aircraft and the said engine (6), where the said method includes the following successive steps:
- production of a rib preform (46a) by superplastic forming, where the said preform has, seen from the front, an outline (50) of a broadly quadrilateral shape, and a central opening (52) traversing this rib preform;
- division of the said rib preform (46a) into two parallel straight-line segments (56, 60), a first straight-line segment (56) connecting a first corner (58) of the quadrilateral to the said opening, and a second straight-line segment (60) connecting a second corner (62) of the quadrilateral, diagonally opposed to the first, to the said opening, where the said division causes the separation into two half-parts (46a', 46a") of the said rib preform; and
- adjustment of the relative positions of the two rib preform half-parts;
- fishplating of the two rib preform half-parts (46a', 46a") by bolting, so as to obtain the said stiffening transverse internal rib (46).

2. A method of manufacture according to claim 1, in which the step of division is preferably undertaken in such a way that the two straight-line segments (56, 60) are supported by a given diagonal (64) of the quadrilateral.

3. A method of manufacture according to claim 1 or claim 2, in which the rib preform (46a) is made such that it has, seen from the front, an outline with a broadly trapezoid shape (50).

4. A method of manufacture according to any of the previous claims, in which the rib preform (46a) is made from a titanium alloy, TAV6.

5. A lower aft aerodynamic fairing (30) for a mounting device (4) of an engine (6) intended to be interposed between a wing surface (2) of an aircraft and the said engine (6), where the said fairing forms a box including two side panels (44) connected to one another by a group of stiffening transverse internal ribs (46) spaced relative to another in a lengthways direction (X) of the said fairing, and also including a thermal protection floor (32) having an outer surface (72) intended to be followed by a primary flow (36) of the said engine,
**characterised in that** at least one of the said stiffening transverse internal ribs (46) is manufactured by implementation of the method according to any of the previous claims.

6. A mounting device (4) of an engine (6) intended to be interposed between an aircraft wing surface (2) and the said engine (6), **characterised in that** it includes a lower aft aerodynamic fairing (30) according to claim 5.

7. An engine assembly (1) including an engine (6) and a mounting device (4) of the engine (6) according to claim 6.

8. An aircraft including at least one engine unit (1) according to claim 7.
